(19) **Europäisches Patentamt / European Patent Office / Office européen des brevets**

(11) **EP 2 550 237 B1**

(12) **FASCICULE DE BREVET EUROPEEN**

(45) Date de publication et mention de la délivrance du brevet:
**16.05.2018 Bulletin 2018/20**

(21) Numéro de dépôt: **11711076.7**

(22) Date de dépôt: **25.03.2011**

(51) Int Cl.:
***C01B 33/193*** (2006.01)

(86) Numéro de dépôt international:
**PCT/EP2011/054645**

(87) Numéro de publication internationale:
**WO 2011/117400 (29.09.2011 Gazette 2011/39)**

(54) **PROCEDE DE PREPARATION DE SILICES PRECIPITEES CONTENANT DE L'ALUMINIUM**

VERFAHREN ZUR HERSTELLUNG VON ALUMINIUMHALTIGER FÄLLUNGSKIESELSÄUREN

METHOD FOR PREPARING PRECIPITATED SILICAS CONTAINING ALUMINIUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.03.2010 FR 1001195**

(43) Date de publication de la demande:
**30.01.2013 Bulletin 2013/05**

(73) Titulaire: **Rhodia Operations**
**75009 Paris (FR)**

(72) Inventeurs:
• **GUY, Laurent**
**F-69140 Rillieux la Pape (FR)**

• **DUPUIS, Dominique**
**F-60800 Crépy-en-Valois (FR)**
• **PERIN, Eric**
**F-69400 Villefranche-sur-Saonne (FR)**

(74) Mandataire: **Banfi, Gaia**
**Solvay S.A. Italia**
**Viale Lombardia, 20**
**20021 Bollate (MI) (IT)**

(56) Documents cités:
EP-A1- 0 983 966   US-A- 4 076 549
US-A1- 2002 112 647   US-A1- 2003 066 459
US-A1- 2008 019 898   US-B1- 6 716 408

**Description**

La présente invention concerne un nouveau procédé de préparation de silice précipitée.

Il est connu d'employer des silices précipitées comme support de catalyseur, comme absorbant de matières actives, (en particulier supports de liquides, par exemple utilisés dans l'alimentation, tels que les vitamines (vitamine E notamment), le chlorure de choline), comme agent viscosant, texturant ou anti-mottant, comme élément pour séparateurs de batteries, comme additif pour dentifrice, pour papier.

On peut également employer des silices précipitées comme charge renforçante dans des matrices silicones (par exemple pour l'enrobage des câbles électriques) ou dans des compositions à base de polymère(s), notamment d'élastomère(s).

Le but de la présente invention est de proposer un nouveau procédé de préparation de silice précipitée contenant de l'aluminium, qui constitue une alternative aux procédés connus de préparation de silice précipitée. Par exemple, US2003/066459 décrit un procédé de préparation de silice dans lequel on réalise la précipitation de la manière suivante: (i) on forme un pied de cuve initial comportant un silicate et un électrolyte, la concentration en silicate (exprimée en $SiO_2$) dans ledit pied de cuve initial étant inférieure à 100 g/L et la concentration en électrolyte dans ledit pied de cuve initial étant inférieure à 17 g/L, (ii) on ajoute l'agent acidifiant audit pied de cuve jusqu'à l'obtention d'une valeur du pH du milieu réactionnel d'au moins environ 7, (iii) on ajoute au milieu réactionnel simultanément de l'agent acidifiant et un silicate, et dans lequel on sèche une suspension présentant un taux de matière sèche d'au plus 24 % en poids, caractérisé en ce que ledit procédé comprend une des deux opérations (a) ou (b) suivantes: (a) on ajoute, après l'étape (iii), au milieu réactionnel au moins un composé A de l'aluminium, puis un agent basique, ladite séparation comportant une filtration et un délitage du gâteau issu de cette filtration, ledit délitage étant effectué en présence d'au moins un composé B de l'aluminium, (b) on ajoute, après l'étape (iii), au milieu réactionnel simultanément un silicate et au moins un composé A de l'aluminium et, lorsque ladite séparation comporte une filtration et un délitage du gâteau issu de cette filtration, le délitage est de préférence effectué en présence d'au moins un composé B de l'aluminium. Le procédé décrit dans US2003/066459 ne comprends pas un étape d'addition simultanée d'un composé de l'aluminium avec de l'agent acidifiant et un silicate.

Ainsi l'objet de l'invention est un nouveau procédé de préparation de silice précipitée comprenant la réaction de précipitation entre un silicate et un agent acidifiant ce par quoi l'on obtient une suspension de silice précipitée, puis la séparation et le séchage de cette suspension, dans lequel :

- on réalise la réaction de précipitation de la manière suivante :

    (i) on forme un pied de cuve initial comportant un silicate et un électrolyte, la concentration en silicate (exprimée en $SiO_2$) dans ledit pied de cuve initial étant inférieure à 100 g/L et la concentration en électrolyte dans ledit pied de cuve initial étant inférieure à 17 g/L,
    (ii) on ajoute l'agent acidifiant audit pied de cuve jusqu'à l'obtention d'une valeur du pH du milieu réactionnel d'au moins 7,
    (iii) on ajoute au milieu réactionnel simultanément de l'agent acidifiant et un silicate,

- on sèche une suspension présentant un taux de matière sèche d'au plus 24 % en poids,

ledit procédé comprenant l'opération (c) suivante :

    (c) l'étape (iii) est réalisée en ajoutant simultanément au milieu réactionnel de l'agent acidifiant, un silicate et au moins un composé B de l'aluminium.

Il est à noter, d'une manière générale, que ce procédé de préparation est un procédé de synthèse de silice de précipitation, c'est-à-dire que l'on fait agir, dans des conditions particulières, un agent acidifiant avec un silicate.

Le choix de l'agent acidifiant et du silicate se fait d'une manière bien connue en soi.

On utilise généralement comme agent acidifiant un acide minéral fort tel que l'acide sulfurique, l'acide nitrique ou l'acide chlorhydrique, ou un acide organique tel que l'acide acétique, l'acide formique ou l'acide carbonique.

L'agent acidifiant peut être dilué ou concentré ; sa normalité peut être comprise entre 0,4 et 36 N, par exemple entre 0,6 et 1,5 N.

En particulier, dans le cas où l'agent acidifiant est l'acide sulfurique, sa concentration peut être comprise entre 40 et 180 g/L, par exemple entre 60 et 130 g/L.

On peut par ailleurs utiliser en tant que silicate toute forme courante de silicates tels que métasilicates, disilicates et avantageusement un silicate de métal alcalin, notamment le silicate de sodium ou de potassium.

Le silicate peut présenter une concentration (exprimée en $SiO_2$) comprise entre 40 et 330 g/L, par exemple entre 60 et 300 g/L.

De manière générale, on emploie, comme agent acidifiant, l'acide sulfurique, et, comme silicate, le silicate de sodium.

Dans le cas où l'on utilise le silicate de sodium, celui-ci présente, en général, un rapport pondéral $SiO_2/Na_2O$ compris entre 2,5 et 4, par exemple entre 3,1 et 3,8.

La réaction du silicate avec l'agent acidifiant se fait d'une manière spécifique selon les étapes suivantes.

On forme tout d'abord un pied de cuve qui comprend du silicate ainsi qu'un électrolyte (étape (i)). La quantité de silicate présente dans le pied de cuve initial ne représente avantageusement qu'une partie de la quantité totale de silicate engagée dans la réaction.

Le terme électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le chlorure de sodium dans le cas de la réaction d'un silicate de sodium avec l'acide chlorhydrique ou, de préférence, le sulfate de sodium dans le cas de la réaction d'un silicate de sodium avec l'acide sulfurique.

La concentration en électrolyte dans le pied de cuve initial est (supérieure à 0 g/L et) inférieure à 17 g/L, par exemple inférieure à 14 g/L.

La concentration en silicate (exprimée en $SiO_2$) dans le pied de cuve initial est (supérieure à 0 g/L et) inférieure à 100 g/L ; de préférence, cette concentration est inférieure à 90 g/L, notamment inférieure à 85 g/L.

La deuxième étape consiste à ajouter l'agent acidifiant dans le pied de cuve de composition décrite plus haut (étape (ii)).

Cette addition qui entraîne une baisse corrélative du pH du milieu réactionnel se fait jusqu'à ce qu'on atteigne une valeur du pH d'au moins 7, généralement comprise entre 7 et 8.

Une fois qu'est atteinte la valeur souhaitée de pH, on procède alors à une addition simultanée (étape (iii)) d'agent acidifiant et de silicate.

Cette addition simultanée est généralement réalisée de manière telle que la valeur du pH du milieu réactionnel soit constamment égale (à +/- 0,1 près) à celle atteinte à l'issue de l'étape (ii).

Le procédé de préparation selon l'invention comprend l'opération (c) mentionnée précédemment, c'est-à-dire :

(c) lors de l'étape (iii), on ajoute au milieu réactionnel simultanément de l'agent acidifiant, un silicate et au moins un composé B de l'aluminium, la séparation, mise en oeuvre dans le procédé, comportant de préférence une filtration et un délitage du gâteau issu de cette filtration, le délitage étant alors éventuellement effectué en présence d'au moins un composé B de l'aluminium.

Dans le procédé de préparation de l'invention (c'est-à-dire lorsque celui-ci comprend l'opération (c)), on effectue, après avoir réalisé les étapes (i) et (ii) décrites précédemment, une étape (iii) qui consiste à ajouter au milieu réactionnel simultanément de l'agent acidifiant, un silicate et au moins un composé B de l'aluminium.

Cette addition simultanée est généralement réalisée de manière telle que la valeur du pH du milieu réactionnel soit constamment égale (à +/- 0,1 près) à celle atteinte à l'issue de l'étape (ii).

Il peut être souhaitable, après l'étape (iii), d'ajouter au milieu réactionnel une quantité supplémentaire d'agent acidifiant. Cette addition se fait généralement jusqu'à l'obtention d'une valeur du pH du milieu réactionnel comprise entre 3 et 6,9, en particulier entre 4 et 6,6.

L'agent acidifiant utilisé lors de cette addition est généralement identique à celui employé lors des étapes (ii) et (iii).

Un mûrissement du milieu réactionnel est habituellement effectué après cette addition d'agent acidifiant, par exemple pendant 1 à 60 minutes, en particulier pendant 3 à 30 minutes.

Le composé B de l'aluminium employé est, en général, un aluminate de métal alcalin, notamment de potassium ou, de manière préférée, de sodium.

La température du milieu réactionnel est généralement comprise entre 70 et 98 °C.

Selon une variante, la réaction est effectuée à une température constante comprise entre 75 et 96 °C.

Selon une autre variante (préférée), la température de fin de réaction est plus élevée que la température de début de réaction : ainsi, on maintient la température au début de la réaction de préférence entre 70 et 96 °C, puis on augmente la température en quelques minutes, de préférence jusqu'à une valeur comprise entre 80 et 98 °C, valeur à laquelle elle est maintenue jusqu'à la fin de la réaction.

On obtient, à l'issue des étapes qui viennent d'être décrites, une bouillie de silice qui est ensuite séparée (séparation liquide-solide).

En général, cette séparation comporte une filtration (suivie d'un lavage si nécessaire) et un délitage, ledit délitage pouvant être alors (de préférence dans le cas des deux premières variantes mentionnées, éventuellement dans le cas de la troisième variante) effectué en présence d'au moins un composé B de l'aluminium et, éventuellement, en présence d'un agent acidifiant tel que décrit précédemment (dans ce dernier cas, le composé B de l'aluminium et l'agent acidifiant sont avantageusement ajoutés de manière simultanée).

L'opération de délitage, qui peut être réalisée mécaniquement, par exemple par passage du gâteau de filtration dans un broyeur de type colloïdal ou à billes, permet notamment d'abaisser la viscosité de la suspension à sécher (en particulier à atomiser) ultérieurement.

Le composé B de l'aluminium consiste, en général, en un aluminate de métal alcalin, notamment de potassium ou, de manière préférée, de sodium.

De préférence, la quantité de composé B de l'aluminium utilisé dans le procédé de préparation de l'invention est tel que la silice précipitée obtenue contient plus de 0,5 % en poids d'aluminium.

La séparation mise en oeuvre dans le procédé de préparation de l'invention comprend habituellement une filtration (avec un lavage si nécessaire) effectuée au moyen de toute méthode convenable, par exemple au moyen d'un filtre à bande, d'un filtre sous vide ou, de préférence, d'un filtre presse.

La suspension de silice précipitée ainsi récupérée (gâteau de filtration) est ensuite séchée.

Dans le procédé de préparation conforme à l'invention, cette suspension doit présenter immédiatement avant son séchage un taux de matière sèche d'au plus 24 % en poids, de préférence d'au plus 22 % en poids.

Ce séchage peut se faire selon tout moyen connu en soi.

De préférence, le séchage se fait par atomisation. A cet effet, on peut utiliser tout type d'atomiseur convenable, notamment un atomiseur à turbines, à buses, à pression liquide ou à deux fluides. En général, lorsque la filtration est effectuée à l'aide d'un filtre presse, on utilise un atomiseur à buses, et, lorsque la filtration est effectuée à l'aide d'un filtre sous-vide, on utilise un atomiseur à turbines.

Lorsque le séchage est effectué à l'aide d'un atomiseur à buses, la silice précipitée susceptible d'être alors obtenue se présente habituellement sous forme de billes sensiblement sphériques.

A l'issue de ce séchage, on peut éventuellement procéder à une étape de broyage sur le produit récupéré ; la silice précipitée susceptible d'être alors obtenue se présente généralement sous forme d'une poudre.

Lorsque le séchage est effectué à l'aide d'un atomiseur à turbines, la silice précipitée susceptible d'être alors obtenue peut se présenter sous la forme d'une poudre.

Enfin, le produit séché (notamment par un atomiseur à turbines) ou broyé tel qu'indiqué précédemment peut éventuellement être soumis à une étape d'agglomération, qui consiste par exemple en une compression directe, une granulation voie humide (c'est-à-dire avec utilisation d'un liant tel que eau, suspension de silice ...), une extrusion ou, de préférence, un compactage à sec. Lorsque l'on met en oeuvre cette dernière technique, il peut s'avérer opportun, avant de procéder au compactage, de désaérer (opération appelée également pré-densification ou dégazage) les produits pulvérulents de manière à éliminer l'air inclus dans ceux-ci et assurer un compactage plus régulier.

La silice précipitée susceptible d'être alors obtenue par cette étape d'agglomération se présente généralement sous la forme de granulés.

La mise en oeuvre du procédé de préparation selon l'invention permet notamment d'obtenir une silice précipitée présentant une teneur en aluminium supérieure à 0,5 % en pids d'aluminium.

Ladite silice précipitée possède généralement une teneur en aluminium d'au plus 7,0 % en poids, de préférence d'au plus 5,0 % en poids, en particulier d'au plus 3,5 % en poids, par exemple d'au plus 3,0 % en poids.

De préférence, sa teneur en aluminium est comprise entre 0,75 et 4,0 % en poids, de manière encore plus préférée entre 0,8 et 3,5 % en poids, en particulier entre 0,9 et 3,2 % en poids, notamment entre 0,9 et 2,5 % en poids ou entre 1,0 et 3,1 % en poids. Elle est par exemple comprise entre 1,0 et 3,0 % en poids, voire entre 1,0 et 2,0 % en poids.

La quantité d'aluminium peut être mesurée par toute méthode convenable, par exemple par ICP-AES (« Inductively Coupled Plasma - Atomic Emission Spectroscopy ») après mise en solution dans l'eau en présence d'acide fluorhydrique.

L'aluminium se situe, en général, essentiellement à la surface de la silice précipitée.

Même si l'aluminium peut être présent à la fois sous forme tétraédrique, sous forme octaédrique et sous forme pentaédrique, en particulier sous forme tétraédrique et sous forme octaédrique, dans la silice précipitée obtenue selon l'invention, il se trouve de préférence essentiellement sous forme tétraédrique (plus de 50 %, en particulier au moins 90 %, notamment au moins 95 %, en nombre, des espèces aluminium sont alors sous forme tétraédrique) ; les liaisons sont alors plutôt essentiellement du type SiOAl.

La silice précipitée contenant de l'aluminium obtenue par le procédé selon l'invention est de manière avantageuse hautement dispersible, c'est-à-dire qu'en particulier elle présente une aptitude à la désagglomération et à la dispersion dans une matrice polymérique très importante, notamment observable par microscopie électronique ou optique, sur coupes fines.

La silice précipitée préparée par le procédé selon l'invention possède de préférence une surface spécifique CTAB comprise entre 70 et 240 m$^2$/g.

Celle-ci peut être comprise entre 70 et 100 m$^2$/g, par exemple entre 75 et 95 m$^2$/g.

Cependant, de manière très préférée, sa surface spécifique CTAB est comprise entre 100 et 240 m$^2$/g, en particulier entre 140 et 200 m$^2$/g.

De même, de préférence, elle possède une surface spécifique BET comprise entre 70 et 240 m$^2$/g.

Celle-ci peut être comprise entre 70 et 100 m$^2$/g, par exemple entre 75 et 95 m$^2$/g.

Cependant, de manière très préférée, sa surface spécifique BET est comprise entre 100 et 240 m$^2$/g, en particulier entre 140 et 200 m$^2$/g.

La surface spécifique CTAB est la surface externe, pouvant être déterminée selon la méthode NF T 45007 (novembre 1987). La surface spécifique BET peut être mesurée selon la méthode de BRUNAUER - EMMETT - TELLER décrite dans "The Journal of the American Chemical Society", vol. 60, page 309 (1938) et correspondant à la norme NF T 45007 (novembre 1987).

L'aptitude à la dispersion (et à la désagglomération) des silices précipitées obtenues par le procédé selon l'invention peut être appréciée au moyen du test suivant, par une mesure granulométrique (par diffraction laser) effectuée sur une suspension de silice préalablement désagglomérée par ultra-sonification (rupture des objets de 0,1 à quelques dizaines de microns). La désagglomération sous ultra-sons est effectuée à l'aide d'un sonificateur VIBRACELL BIOBLOCK (750 W), équipé d'une sonde de diamètre 19 mm. La mesure granulométrique est effectuée par diffraction laser sur un granulomère SYMPATEC, en mettant en oeuvre la théorie de Fraunhofer.

On pèse dans un pilulier (hauteur : 6 cm et diamètre : 4 cm) 2 grammes de silice et l'on complète à 50 grammes par ajout d'eau permutée : on réalise ainsi une suspension aqueuse à 4 % de silice qui est homogénéisée pendant 2 minutes par agitation magnétique. On procède ensuite à la désagglomération sous ultra-sons comme suit : la sonde étant immergée sur une longueur de 4 cm, on la met en action pendant 5 minutes et 30 secondes à 80 % de sa puissance nominale (amplitude).. On réalise ensuite la mesure granulométrique en introduisant dans la cuve du granulomètre un volume V (exprimé en ml) de la suspension homogénéisée nécessaire pour obtenir une densité optique de l'ordre de 20.

La valeur du diamètre médian $\emptyset_{50}$ que l'on obtient selon ce test est d'autant plus faible que la silice présente une aptitude à la désagglomération élevée.

Un facteur de désagglomération $F_D$ est donné par l'équation :

$$F_D = 10 \times V \text{ / densité optique de la suspension mesurée par le granulomètre}$$

$$\text{(cette densité optique est de l'ordre de 20).}$$

Ce facteur de désagglomération $F_D$ est indicatif du taux de particules de taille inférieure à 0,1 $\mu$m qui ne sont pas détectées par le granulomètre. Ce facteur est d'autant plus élevé que la silice présente une aptitude à la désagglomération élevée.

En général, les silices précipitées contenant de l'aluminium préparées par le procédé selon l'invention possèdent un diamètre médian $\emptyset_{50}$, après désagglomération aux ultra-sons, inférieur à 5 $\mu$m, en particulier inférieur à 4 $\mu$m, par exemple inférieur à 3 $\mu$m.

Elles présentent habituellement un facteur de désagglomération aux ultra-sons $F_D$ supérieur à 4,5 ml, en particulier supérieur à 5,5 ml, par exemple supérieur à 10 ml.

Leur prise d'huile DOP peut être inférieure à 300 ml/100g, par exemple comprise entre 200 et 295 ml/100g. La prise d'huile DOP peut être déterminée selon la norme ISO 787/5 en mettant en oeuvre le dioctylphtalate.

Un des paramètres de la silice obtenue par le procédé selon l'invention peut résider dans la distribution, ou répartition, de son volume poreux, et notamment dans la distribution du volume poreux qui est généré par les pores de diamètres inférieurs ou égaux à 400 Å. Ce dernier volume correspond au volume poreux utile des charges employées dans le renforcement des élastomères. En général, l'analyse des porogrammes montre que cette silice possède de préférence une distribution poreuse telle que le volume poreux généré par les pores dont le diamètre est compris entre 175 et 275 Å (V2) représente moins de 50 % du volume poreux généré par les pores de diamètres inférieurs ou égaux à 400 Å (V1).

Les volumes poreux et diamètres de pores sont mesurés par porosimétrie au mercure (Hg), à l'aide d'un porosimètre MICROMERITICS Autopore 9520, et sont calculés par la relation de WASHBURN avec un angle de contact théta égal à 130° et une tension superficielle gamma égale à 484 Dynes/cm.

Le pH de la silice précipitée obtenue par le procédé selon la présente invention est généralement compris entre 6,3 et 7,6.

Le pH est mesuré selon la méthode suivante dérivant de la norme ISO 787/9 (pH d'une suspension à 5 % dans l'eau) :

Appareillage :

- pHmètre étalonné (précision de lecture au 1/100e)
- électrode de verre combinée
- bécher de 200 mL
- éprouvette de 100 mL
- balance de précision à 0,01 gramme près.

Mode opératoire :

5 grammes de silice sont pesés à 0,01 gramme près dans le bécher de 200 mL. 95 mL d'eau mesurés à partir de l'éprouvette graduée sont ensuite ajoutés à la poudre de silice. La suspension ainsi obtenue est agitée énergiquement (agitation magnétique) pendant 10 minutes. La mesure du pH est alors effectuée.

L'état physique dans lequel se présente la silice précipitée préparée par le procédé selon l'invention peut être quelconque, c'est-à-dire qu'elle peut se présenter par exemple sous forme de microperles (billes sensiblement sphériques), de poudre ou de granulés.

Elle peut ainsi se présenter sous forme de billes sensiblement sphériques de taille moyenne d'au moins 80 $\mu$m, de préférence d'au moins 150 $\mu$m, en particulier comprise entre 150 et 270 $\mu$m ; cette taille moyenne est déterminée selon la norme NF X 11507 (décembre 1970) par tamisage à sec et détermination du diamètre correspondant à un refus cumulé de 50 %.

Elle peut se présenter sous forme de poudre de taille moyenne d'au moins 3 $\mu$m, en particulier d'au moins 10 $\mu$m, de préférence d'au moins 15 $\mu$m.

Elle peut se présenter sous forme de granulés (en général de forme sensiblement parallélépipédique) de taille d'au moins 1 mm, par exemple comprise entre 1 et 10 mm, notamment selon l'axe de leur plus grande longueur.

La silice précipitée préparée par le procédé selon l'invention peut être utilisée dans de nombreuses applications.

Elle peut être employée par exemple comme support de catalyseur, comme absorbant de matières actives (en particulier support de liquides, notamment utilisés dans l'alimentation, tels que les vitamines (vitamine E), le chlorure de choline), dans des compositions de polymère(s), notamment d'élastomère(s), de silicone(s), comme agent viscosant, texturant ou anti-mottant, comme élément pour séparateurs de batteries, comme additif pour dentifrice, pour béton, pour papier.

Elle est ainsi utilisable dans le renforcement des polymères, naturels ou synthétiques.

Les compositions de polymère(s) dans lesquelles elle peut être employée, notamment à titre de charge renforçante, sont en général à base d'un ou plusieurs polymères ou copolymères, en particulier d'un ou plusieurs élastomères, présentant, de préférence, au moins une température de transition vitreuse comprise entre -150 et +300 °C, par exemple entre -150 et +20 °C.

A titre de polymères possibles, on peut mentionner notamment les polymères diéniques, en particulier les élastomères diéniques.

On peut citer, comme exemples non limitatifs d'articles finis à base desdites compositions de polymère(s), les semelles de chaussures, les pneumatiques, les revêtements de sols, les barrières aux gaz, les matériaux ignifugeants et également les pièces techniques telles que les galets de téléphériques, les joints d'appareils électroménagers, les joints de conduites de liquides ou de gaz, les joints de système de freinage, les tuyaux (flexibles), les gaines (notamment les gaines de câbles), les câbles, les supports de moteur, les bandes de convoyeur, les courroies de transmissions.

Les exemples suivants illustrent l'invention sans toutefois en limiter la portée.

EXEMPLE 1 (pas de l'invention)

Dans un réacteur en acier inoxydable muni d'un système d'agitation par hélices et d'un chauffage électrique externe, on introduit :

- 29,335 kg d'eau
- 509 g de Na2SO$_4$
- 17,3kg de silicate de sodium aqueux, présentant un rapport pondéral $SiO_2/Na_2O$ égal à 3,44 et une densité à 20 °C égale à 1,232.

La concentration en silicate (exprimée en $SiO_2$) dans le pied de cuve initial est alors de 76,5 g/L.

Le mélange est alors porté à une température de 83 °C tout en le maintenant sous agitation. On y introduit ensuite 17180 g d'acide sulfurique dilué de densité à 20 °C égale à 1,050 afin d'obtenir dans le milieu réactionnel une valeur de pH (mesurée à sa température) égale à 8. La température de la réaction est de 83 °C pendant les 20 premières minutes ; elle est ensuite portée de 83 à 92 °C en 30 minutes environ, ce qui correspond à la fin de l'acidification.

On introduit ensuite conjointement dans le milieu réactionnel 4100 g de silicate de sodium aqueux du type décrit ci-avant et 7540 g d'une solution de sulfate d'aluminium de densité 20 °C égale à 1,056, cette introduction simultanée de sulfate d'aluminium et de silicate étant réalisée de manière telle que le pH du milieu réactionnel, pendant la période d'introduction, soit constamment égal à $8,0 \pm 0,1$. Après cette addition conjointe, on introduit dans le milieu réactionnel, pendant 5 minutes, de l'acide sulfurique du type décrit ci-avant de manière à amener le pH du milieu réactionnel à une valeur égale à 5,2. Après cette introduction d'acide, on maintient la bouillie réactionnelle obtenue pendant 5 minutes sous agitation.

La durée totale de la réaction est de 85 minutes.

On obtient ainsi une bouillie ou suspension de silice précipitée qui est ensuite filtrée et lavée au moyen d'un filtre plan.

Le gâteau obtenu est ensuite fluidifié par action mécanique et chimique (ajout simultané d'acide sulfurique et d'une quantité d'aluminate de sodium correspondant à un rapport pondéral Al/SiO$_2$ de 0,3 %). Après cette opération de délitage, la bouillie résultante, de pH égal à 6,5 et de perte au feu égale à 85,0 % (donc un taux de matière sèche de 15,0 % en poids), est séchée par atomisation.

A titre de polymères possibles, on peut mentionner notamment les polymères diéniques, en particulier les élastomères diéniques.

On peut citer, comme exemples non limitatifs d'articles finis à base desdites compositions de polymère(s), les semelles de chaussures, les pneumatiques, les revêtements de sols, les barrières aux gaz, les matériaux ignifugeants et également les pièces techniques telles que les galets de téléphériques, les joints d'appareils électroménagers, les joints de conduites de liquides ou de gaz, les joints de système de freinage, les tuyaux (flexibles), les gaines (notamment les gaines de câbles), les câbles, les supports de moteur, les bandes de convoyeur, les courroies de transmissions.

Les exemples suivants illustrent l'invention sans toutefois en limiter la portée.

EXEMPLE 1

Dans un réacteur en acier inoxydable muni d'un système d'agitation par hélices et d'un chauffage électrique externe, on introduit :

- 29,335 kg d'eau
- 509 g de Na2SO$_4$
- 17,3 kg de silicate de sodium aqueux, présentant un rapport pondéral SiO$_2$/Na$_2$O égal à 3,44 et une densité à 20 °C égale à 1,232.

La concentration en silicate (exprimée en SiO$_2$) dans le pied de cuve initial est alors de 76,5 g/L.

Le mélange est alors porté à une température de 83 °C tout en le maintenant sous agitation. On y introduit ensuite 17180 g d'acide sulfurique dilué de densité à 20 °C égale à 1,050 afin d'obtenir dans le milieu réactionnel une valeur de pH (mesurée à sa température) égale à 8. La température de la réaction est de 83 °C pendant les 20 premières minutes ; elle est ensuite portée de 83 à 92 °C en 30 minutes environ, ce qui correspond à la fin de l'acidification.

On introduit ensuite conjointement dans le milieu réactionnel 4100 g de silicate de sodium aqueux du type décrit ci-avant et 7540 g d'une solution de sulfate d'aluminium de densité 20 °C égale à 1,056, cette introduction simultanée de sulfate d'aluminium et de silicate étant réalisée de manière telle que le pH du milieu réactionnel, pendant la période d'introduction, soit constamment égal à $8,0 \pm 0,1$. Après cette addition conjointe, on introduit dans le milieu réactionnel, pendant 5 minutes, de l'acide sulfurique du type décrit ci-avant de manière à amener le pH du milieu réactionnel à une valeur égale à 5,2. Après cette introduction d'acide, on maintient la bouillie réactionnelle obtenue pendant 5 minutes sous agitation.

La durée totale de la réaction est de 85 minutes.

On obtient ainsi une bouillie ou suspension de silice précipitée qui est ensuite filtrée et lavée au moyen d'un filtre plan.

Le gâteau obtenu est ensuite fluidifié par action mécanique et chimique (ajout simultané d'acide sulfurique et d'une quantité d'aluminate de sodium correspondant à un rapport pondéral Al/SiO$_2$ de 0,3 %). Après cette opération de délitage, la bouillie résultante, de pH égal à 6,5 et de perte au feu égale à 85,0 % (donc un taux de matière sèche de 15,0 % en poids), est séchée par atomisation.

Les caractéristiques de la silice obtenue sous forme de poudre sont alors les suivantes :

- surface spécifique CTAB 158 m$^2$/g

- surface spécifique BET 178 $m^2$/g
- teneur pondéral en aluminium 1,5 %
- rapport V2/V1 47 %
- pH 7,5

On soumet cette silice au test de désagglomération tel que défini précédemment dans la description.

Après désagglomération aux ultra-sons, elle présente un diamètre médian ($\emptyset_{50}$) de 2,9 $\mu$m.

EXEMPLE 2

Dans un réacteur en acier inoxydable muni d'un système d'agitation par hélices et d'un chauffage électrique externe, on introduit :

- 29,35 kg d'eau
- 509 g de Na2SO$_4$
- 17,2 kg de silicate de sodium aqueux, présentant un rapport pondéral $SiO_2$/$Na_2O$ égal à 3,44 et une densité à 20 °C égale à 1,230.

La concentration en silicate (exprimée en $SiO_2$) dans le pied de cuve initial est alors de 76,5 g/L.

Le mélange est alors porté à une température de 83 °C tout en le maintenant sous agitation. On y introduit ensuite 16900 g d'acide sulfurique dilué de densité à 20 °C égale à 1,050 afin d'obtenir dans le milieu réactionnel une valeur de pH (mesurée à sa température) égale à 8. La température de la réaction est de 83 °C pendant les 20 premières minutes ; elle est ensuite portée de 83 à 92 °C en 30 minutes environ, ce qui correspond à la fin de l'acidification.

On introduit ensuite conjointement dans le milieu réactionnel 4100 g de silicate de sodium aqueux du type décrit ci-avant, 2150 g d'aluminate de sodium dilué de densité à 20 °C égale à 1,237 et 6000 g d'acide sulfurique du type décrit ci-avant, cette introduction simultanée d'acide, de silicate et d'aluminate de sodium étant réalisée de manière telle que le pH du milieu réactionnel, pendant la période d'introduction, soit constamment égal à 8,0 $\pm$ 0,1.

Après cette addition conjointe, on continue à introduire dans le milieu réactionnel, pendant 3,5 minutes, de l'acide sulfurique du type décrit ci-avant de manière à amener le pH du milieu réactionnel à une valeur égale à 6,5. Après cette introduction d'acide, on maintient la bouillie réactionnelle obtenue pendant 5 minutes sous agitation.

La durée totale de la réaction est de 87 minutes.

On obtient ainsi une bouillie ou suspension de silice précipitée qui est ensuite filtrée et lavée au moyen d'un filtre plan.

Le gâteau obtenu est ensuite fluidifié par action mécanique. Après cette opération de délitage, la bouillie résultante, de perte au feu égale à 84,5 % (donc un taux de matière sèche de 15,5 % en poids), est séchée par atomisation.

Les caractéristiques de la silice obtenue sous forme de poudre sont alors les suivantes :

- surface spécifique CTAB 135 $m^2$/g
- surface spécifique BET 160 $m^2$/g
- teneur pondéral en aluminium 2,7 %
- rapport V2/V1 40 %
- pH 6,7

On soumet cette silice au test de désagglomération tel que défini précédemment dans la description.

Après désagglomération aux ultra-sons, elle présente un diamètre médian ($\emptyset_{50}$) de 2,9 $\mu$m.

**Revendications**

1. Procédé de préparation de silice précipitée contenant de l'aluminium, du type comprenant la réaction de précipitation entre un silicate et un agent acidifiant ce par quoi l'on obtient une suspension de silice précipitée, puis la séparation et le séchage de cette suspension, dans lequel :

   - on réalise la réaction de précipitation de la manière suivante :

      (i) on forme un pied de cuve initial comportant un silicate et un électrolyte, la concentration en silicate (exprimée en $SiO_2$) dans ledit pied de cuve initial étant inférieure à 100 g/L et la concentration en électrolyte dans ledit pied de cuve initial étant inférieure à 17 g/L,

(ii) on ajoute l'agent acidifiant audit pied de cuve jusqu'à l'obtention d'une valeur du pH du milieu réactionnel d'au moins 7,
(iii) on ajoute au milieu réactionnel simultanément de l'agent acidifiant et un silicate,

- on sèche une suspension présentant un taux de matière sèche d'au plus 24 % en poids,

**caractérisé en ce que** l'étape (iii) est réalisée en ajoutant simultanément au milieu réactionnel l'agent acidifiant, un silicate et au moins un composé B de l'aluminium.

**2.** Procédé selon la revendication 1, **caractérisé en ce que**, après l'étape (iii), on ajoute au milieu réactionnel de l'agent acidifiant, de préférence jusqu'à l'obtention d'une valeur du pH du milieu réactionnel comprise entre 3 et 6,9.

**3.** Procédé selon la revendication 2, **caractérisé en ce que** le composé B est un aluminate de métal alcalin, de préférence un aluminate de sodium.

**4.** Procédé selon l'une des revendications 1 à 3, **caractérisé en ce que** la séparation comporte une filtration et un délitage du gâteau issu de la filtration.

**5.** Procédé selon l'une des revendications 1 à 4, **caractérisé en ce que** le séchage est effectué par atomisation.


**Patentansprüche**

**1.** Verfahren zur Herstellung von aluminiumhaltiger Fällungskieselsäure der Art, die eine Fällungsreaktion zwischen einem Silikat und einem Ansäuerungsmittel unter Erhalt einer Suspension von Fällungskieselsäure und die anschließende Trennung und Trocknung dieser Suspension umfasst, be idem man :

- die Fällungsreaktion folgendermaßen durchführt :

(i) man bildet eine Vorlage, die ein Silikat und einen Elektrolyt umfasst, wobei die Konzentration von Silikat (ausgedrückt als $SiO_2$) in der Vorlage weniger als 100 g/L beträgt und die Konzentration von Elektrolyt in der Vorlage weniger als 17 g/L beträgt,
(ii) man gibt das Ansäuerungsmittel bis zum Erhalt eines pH-Werts des Reaktionsmediums von mindestens 7 zu der Vorlage,
(iii) man gibt gleichzeitig Ansäuerungsmittel und ein Silikat zum Reaktionsmedium,

- eine Suspension mit einem Feststoffgehalt von höchstens 24 Gew.-% trocknet,

**Dadurch gekennzeichnet, dass** Schritt (iii) durch gleichzeitige Zugabe des Ansäuerungsmittels, eines Silikats und mindestens einer Aluminiumverbindung B zum Reaktionsmedium durchgeführt wird.

**2.** Verfahren nach Anspruch 1, **dadurch gekennzeichnet, dass** man nach Schritt (iii) Ansäuerungsmittel zum Reaktionsmedium gibt, vorzugsweise bis zum Erhalt eines pH-Werts des Reaktionsmediums zwischen 3 und 6, 9.

**3.** Verfahren nach Anspruch 2, **dadurch gekennzeichnet, dass** es sich bei der Verbindung B um ein Alkali-metallaluminat, vorzugsweise ein Natriumaluminat, handelt.

**4.** Verfahren nach einem der Ansprüche 1 bis 3, **dadurch gekennzeichnet, dass** die Trennung eine Filtration und eine Aufbrechung des sich aus der Filtration ergebenden Kuchens umfasst.

**5.** Verfahren nach einem der Ansprüche 1 bis 4, **dadurch gekennzeichnet, dass** die Trocknung durch Zerstäubung erfolgt.


**Claims**

**1.** Process for preparing precipitated silica containing aluminum, of the type comprising the precipitation reaction between a silicate and an acidifying agent, via which a suspension of precipitated silica is obtained, followed by the separation and drying of this suspension, in which :

- the precipitation reaction is performed in the following manner :

(i) an initial feedstock is formed comprising a silicate and an electrolyte, the concentration of silicate (expressed as $SiO_2$) in said initial feedstock being less than 100 g/L and the concentration of electrolyte in said initial feedstock being less than 17 g/L,
(ii) the acidifying agent is added to said feedstock until a pH value of the reaction medium of at least 7 is obtained,
(iii) acidifying agent and a silicate are simultaneously added to the reaction medium,

- a suspension with a solids content of not more than 24% by weight is dried,

**characterized in that** step (iii) is performed by simultaneously adding to the reaction medium the acidifying agent, a silicate and at least one aluminum compound B.

2.  Process according to Claim 1, **characterized in that**, after step (iii), acidifying agent is added to the reaction medium, preferably until a pH value of the reaction medium of between 3 and 6.9 is obtained.

3.  Process according to Claim 2, **characterized in that** compound B is an alkali metal aluminate, preferably a sodium aluminate.

4.  Process according to one of Claims 1 to 3, **characterized in that** the separation comprises a filtration and breakdown of the cake resulting from the filtration.

5.  Process according to one of Claims 1 to 4, **characterized in that** the drying is performed by atomization.

## RÉFÉRENCES CITÉES DANS LA DESCRIPTION

**Documents brevets cités dans la description**

- US 2003066459 A

**Littérature non-brevet citée dans la description**

- **BRUNAUER ; EMMETT ; TELLER.** *The Journal of the American Chemical Society,* 1938, vol. 60, 309